# EUROPÄISCHE PATENTSCHRIFT

(11) **EP 0 694 254 B1**
(45) Veröffentlichungstag und Bekanntmachung des Hinweises auf die Patenterteilung: **06.03.1996**
(21) Anmeldenummer: 95101004.0
(22) Anmeldetag: 26.01.1995
(51) Int. Cl.: A01J 27/00

(54) **Vorrichtung zum Anbringen eines manschettenartigen Bandes um die Mantelfläche eines zylindrischen Käselaibes**
Device for applying a sleeve-shaped band on the surface of a cylindrical cheese block
Dispositif pour apposer une bande en forme de manchon sur la surface d'un bloc de fromage cylindrique

(30) Priorität: 18.03.1994 DE 4409222
(43) Veröffentlichungstag der Anmeldung: 31.01.1996
(73) Patentinhaber: Käserei Niederrhein Gmbh & Co. KG, D-47546 Kalkar-Niedermörmter (DE)
(72) Erfinder: Meetz, Hans, D-46459 Rees (DE)
(74) Vertreter: Patentanwälte Ostriga & Sonnet

(56) Entgegenhaltungen:
- EP-A- 0 329 250
- EP-A- 0 387 959
- EP-A- 0 418 977
- DE-A- 3 239 069
- DE-U- 9 404 560

## Beschreibung

Die Erfindung betrifft eine Vorrichtung zum Anbringen eines manschettenartigen Bandes um die Mantelfläche eines im wesentlichen zylindrischen Käselaibes entsprechend dem Oberbegriff des Anspruchs 1. Eine solche Vorrichtung ist in der DE 32 39 069 C2 beschrieben.

In der DE 32 39 069 C2 ist zutreffend dargelegt, daß manche Käsearten, wie Halbhartkäse vom Maasdamer-Typ, nach ihrer auf die Herstellungsphase folgenden Reifungsphase einer unerwünschten Formänderung ausgesetzt sind. Um eine derartige unerwünschte Formänderung während der Reifungsphase zu verhindern, werden die Mantelflächen der Käselaibe mit einem für Nahrungsmittel verträglichen Leim versehen und sodann zur Bildung einer umlaufend geschlossenen Manschette mit einem Band umreift. Das manschettenartige Band dient regelmäßig nur der Formstabilität, ist ansonsten aber wasserdampf- und sauerstoffdurchlässig.

Die Konsistenz derartiger Bänder ist außer in der DE 32 39 069 C2 auch in der EP 0 387 959 B1, in der EP 0 418 977 B1 und in der EP 0 329 250 B1 offenbart.

Bei der eingangs beschriebenen bekannten Vorrichtung gemäß der DE 32 39 069 C2 besteht die Förderbahn aus einem langgestreckt rechteckigen Kugeltisch, dessen eine Längsseitenbegrenzung von einer Andruckleiste und dessen andere Längsseitenbegrenzung von zwei senkrecht stehenden, umlaufend geführten Förderbändern begrenzt ist.

Der Kugeltisch bildet die eigentliche Förderbahn, auf welcher die zu umreifenden Käselaibe zugeführt werden. Die senkrechten Förderbänder erteilen den Käselaiben eine Rotationsbewegung, welche dazu ausgenutzt wird, daß manschettenartige Band um die Mantelfläche des jeweiligen Käselaibes zu schlingen.

Hierzu ist an der dem Kugeltisch abgewandten Seite des einen bezüglich der Förderrichtung der Käselaibe stromabwärts angeordneten senkrechten Förderbandes eine Bandvorratsrolle vorgesehen. Der Bandvorratsrolle folgt ablaufseitig eine Perforierwalze, die das Band mit einer Sollbruchstelle in Form einer Querperforation versieht. Im Anschluß an die Perforierwalze wird das Band außenseitig mit Leim versehen und zwischen die beiden aufeinanderfolgenden senkrechten Förderbänder hindurch über das stromabwärts angeordnete senkrechte Förderband an die rotierende Mantelfläche des Käselaibes herangeführt. Hierbei sorgt ein Luftstoßorgan dafür, daß das Band während des Umreifens ständig an den Mantel des Käselaibes geheftet wird.

Die Durchtrennung der Sollbruchstelle wird durch zeitweises Stillsetzen der Perforierwalze bewirkt.

Die durch die DE 32 39 069 C2 bekannte Vorrichtung wird in mancherlei Hinsicht als nachteilig empfunden. So ist beispielsweise ein Kugeltisch, der die Rotation der einzelnen Käselaibe um die eigene Mittelachse ermöglichen soll, sehr verschmutzungsgefährdet, da sich sehr leicht Abrieb an den Oberflächen der Kugelrollen festsetzen kann. Andererseits erfordert ein Kugeltisch einen relativ großen Bauaufwand. In jedem Falle ist die bekannte Vorrichtung insgesamt nur für die Umreifung von Käselaiben zu nutzen und deshalb nicht in eine Käseherstellung integrierbar, die sich auch mit anderen, nicht zu umreifenden Käsetypen befaßt.

Ausgehend von der eingangs beschriebenen Vorrichtung gemäß der DE 32 39 069 C2, liegt der Erfindung die Aufgabe zugrunde, die bekannte Vorrichtung so umzuändern, daß sie eine wenig aufwendige kompakte Bauweise gestattet, welche relativ einfach in ein bereits vorhandenes Fördersystem einer Käserei eingegliedert werden kann.

Diese Aufgabe wird entsprechend der Erfindung dadurch gelöst, daß der Käselaib bezüglich der Förderbahn gegen Drehung sicherbar ist, daß die Einzelvorrichtungen, eine Durchtrittsöffnung für den Käselaib freilassend, um letzteren herum gruppierbar und unterhalb der gemeinsamen Halterung an letzterer angeordnet sind, welche gemeinsam mit den an ihr gehaltenen Einzelvorrichtungen um eine mit der Längsmittelachse des Käselaibes koaxiale Drehachse antreibbar ist.

Im Unterschied zur bekannten Vorrichtung gemäß der DE 32 39 069 C2 sind bei der erfindungsgemäßen Vorrichtung alle der Handhabung des Bandes dienenden Einzelvorrichtungen, also die Bandvorratsrolle, die Bandumlenk-, Bandführungs- und Bandablängmittel sowie die Leimauftrag- und Bandandruckmittel an der Unterseite einer Halterung angeordnet. Die Halterung wiederum ist gewissermaßen schwebend oberhalb der Förderbahn positioniert. Die Einzelvorrichtungen sind derart um den zu umreifenden Käselaib herum gruppiert, daß diesem eine Druchtrittsöffnung verbleibt, über welche er der Vorrichtung zugeführt werden und diese nach erfolgter Umreifung verlassen kann.

Der Umreifungsvorgang selbst geschieht entsprechend der Erfindung in einfacher Weise dadurch, daß die gesamte Halterung gemeinsam mit den an ihr gehaltenen Einzelvorrichtungen um den Käselaib herum rotiert, während dieser auf der Förderbahn festgehalten wird, d.h. insbesondere gegen Drehung gesichert ist.

Es ist leicht einzusehen, daß die erfindungsgemäße Vorrichtung im Bedarfsfalle in einfacher Weise praktisch mit beliebigen Förderbahnen kombiniert werden kann. Der Förderbahn brauchen nur Mittel zugeordnet zu werden, welche den Käselaib gegen Eigenrotation sichern. Bei Verwendung eines üblichen Gurtförderers geschieht dies in einfacher Weise durch den ohnehin vorhandenen Reibschluß zwischen der Oberfläche des Förderbandes und der Unterfläche des Käselaibes.

Der Betrieb der erfindungsgemäßen Vorrichtung erscheint grundsätzlich auch bei einem ständig weiterfördernden Fördermittel möglich. Dabei würde sich während der Umreifung ein Schlupf zwischen der Oberfläche des Fördermittels und der Unterfläche des Käselaibes einstellen. Für die Vielzahl der Anwendungsfälle ist es jedoch vorzuziehen, daß das Fördermittel, insbesondere das Förderband, taktweise bewegbar ist und daß der Käselaib während eines Ruhetaktes unter der die Einzelvorrichtungen tragenden Halterung verharrt.

Eine besonders eigenartige erfindungsgemäße Ausführungsform besteht darin, daß die Antriebswelle gemeinsam mit der Halterung in einer Schwenkebene angeordnet und daß die Halterung gemeinsam mit den an ihr angeordneten Einzelvorrichtungen aus dem von der Förderbahn gebildeten Fördertrum für die Käselaibe herausschwenkbar ist.

Mit der vorbeschriebenen erfindungsgemäßen Ausgestaltung ist es möglich, die Vorrichtung nur dann in den Bewegungsraum der Förderbahn, d.h. in das Fördertrum, einzuschwenken, wenn Käselaibe umreift werden müssen. Für den Fall, daß sich die Käseherstellung darüber hinaus zeitweilig mit nicht unbedingt zu umreifenden Käsetypen, z.B. mit dem Gouda-Typ, befaßt, kann die Vorrichtung auf einfache Weise aus dem Fördertrum herausgeschwenkt werden.

Als Alternative für die baulich relativ einfache Schwenkausführung sind selbstverständlich auch Mittel denkbar, die es gestatten, die Vorrichtung im Bedarfsfall translatorisch aus dem Fördertrum herauszuführen bzw. die Vorrichtung wiederum translatorisch in ihre Betriebsposition zu versetzen.

Zum Begriff des im wesentlichen "zylindrischen Käselaibes" sei noch ergänzt, daß dieser im allgemein geometrischen Sinne und auch dahingehend verstanden werden soll, daß die Querschnittskontur der Mantelfläche eines Käselaibes regelmäßig bombiert ist.

Zusätzliche Erfindungsmerkmale sind den Unteransprüchen zu entnehmen.

In den Zeichnungen ist ein bevorzugtes Ausführungsbeispiel entsprechend der Erfindung dargestellt, hierbei zeigt
Fig. 1 in schematischer Darstellung eine Seitenansicht einer Vorrichtung zum Anbringen eines manschettenartigen Bandes um die Mantelfläche eines im wesentlichen zylindrischen Käselaibes,
Fig. 2 eine Ansicht entsprechend dem in Fig. 1 mit II bezeichneten Ansichtspfeil,
Fig. 3 eine Draufsicht auf die in Fig. 1 gestrichelt dargestellte Vorrichtung bei Weglassung von Bauteilen, insbesondere des elektromotorischen Antriebsmittels, ansonsten etwa entsprechend der in Fig. 1 mit III bezeichneten Blickrichtung,
Fig. 4 eine an Fig. 3 angelehnte Darstellung, bei welcher zur Sichtbarmachung von Einzelvorrichtungen, die der Handhabung des Bandes dienen, ein Teil der plattenartigen Halterung weggebrochen dargestellt ist,

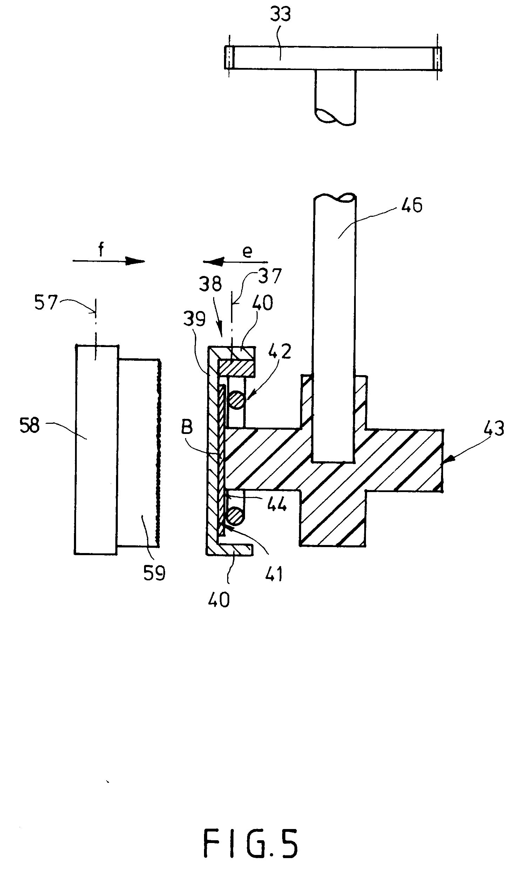

Fig. 5 eine Schnittansicht etwa entsprechend der in Fig. 4 mit V-V bezeichneten Schnittlinie und
Fig. 6 einen Vertikalschnitt in Anlehnung an die mit VI-VI bezeichnete Schnittlinie in Fig. 1.

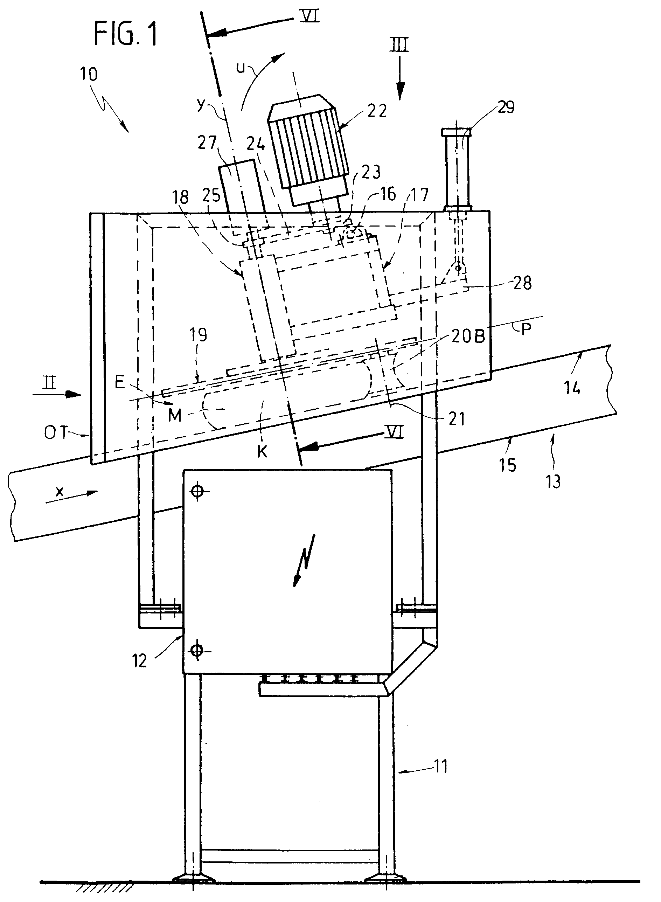

In Fig. 1 ist eine Vorrichtung zum Anbringen eines manschettenartigen Bandes B um die Mantelfläche M eines im wesentlichen zylindrischen Käselaibes K insgesamt mit der Bezugsziffer 10 bezeichnet.

Zur Vorrichtung 10 gehört ein Traggerüst 11, welches auch einen elektrischen Anschluß- und Steuerkasten 12 aufnimmt.

Oberhalb eines umlaufend geführten Förderbandes 13, welches einen Obergurt 14 und einen Untergurt 15 aufweist, trägt das Traggerüst 11 an einer horizontalen Schwenkachse 16 eine gestrichelt eingetragene Schwenkkonsole 17 mit einer an ihr festen Hohlachse 18.

Unterhalb der Hohlachse 18 befindet sich eine plattenartige Halterung 19 mit zwei Bürstenrollen 20A, 20B, von denen in Fig. 1 nur die Bürstenrolle 20B gestrichelt dargestellt ist. Die Drehachsen der Bürstenrolle 20A, 20B sind mit 21 bezeichnet.

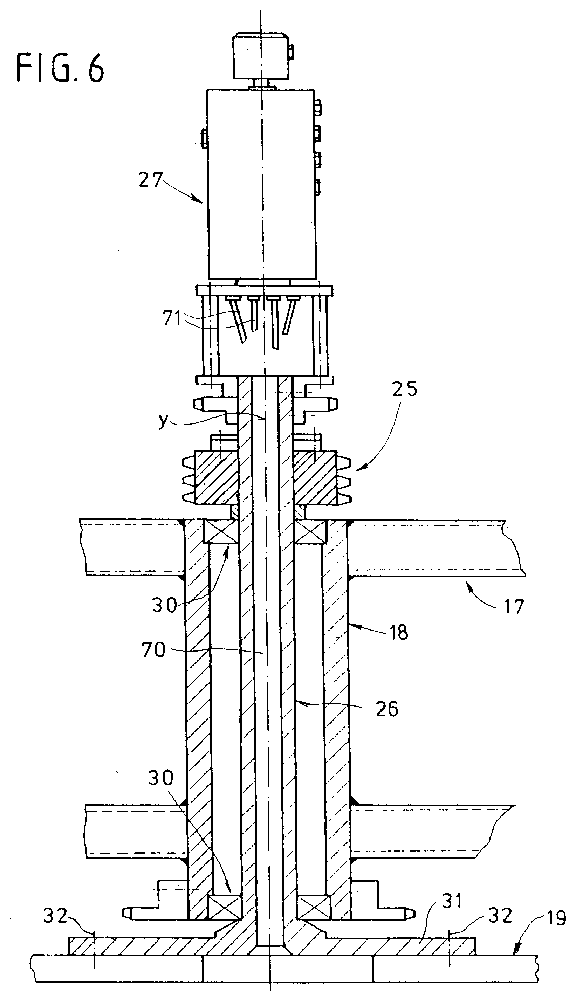

Aus Fig. 1 geht weiterhin ein elektrischer Antriebsmotor 22 hervor, welcher mittels eines Kettenrades 23 über eine Kette 24 ein Kettenritzel 25 und mit letzterem eine Antriebswelle 26 (s.a. Fig. 6) in Drehung versetzt.

Aus Fig. 1 ist ebenfalls eine mit der Antriebswelle 26 fluchtende Dosiervorrichtung 27 für den auf die Mantelfläche M des Käselaibes K aufzusprühenden Leim zu erkennen.

Über einen Hebelfortsatz 28 ist die Schwenkkonsole 17 einschließlich der an ihr befestigten Bauteile mittels einer druckluftbetriebenen Kolben-Zylinder-Einheit 29 in Schwenkrichtung u aus dem Obertrum OT des Förderbandes 13 herausschwenkbar. Dieses für den Fall, daß das Förderband 13 für den Transport nicht zu umreifender Käse-Preßlinge benutzt werden soll.

Die plattenartige Halterung 19 ist einschließlich der an ihr gehaltenen Einzelvorrichtungen, so z.B. einschließlich der Bürstenrollen 20A, 20B, um eine mit der Längsmittelachse des Käselaibes K koaxialen Drehachse y mittels des Elektromotors 22 antreibbar.

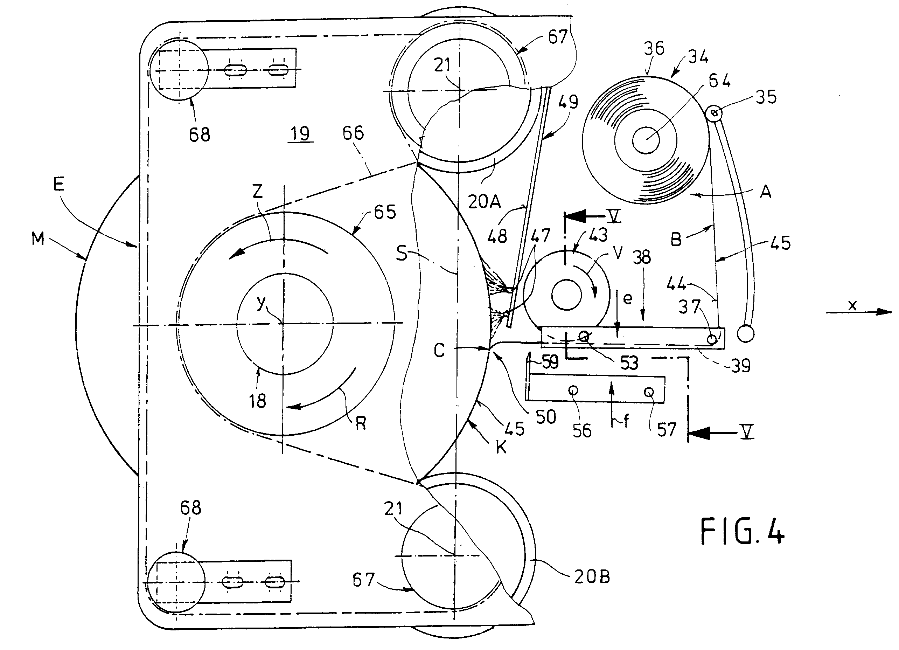

Der Käselaib K stellt einen Käsepreßling dar, welcher der Reifephase in einem klimatisierten Lagerraum zugeführt, zuvor jedoch mit einem seine äußere Form stabilisierenden manschettenartigen Band B (s. Fig. 4) umreift, werden soll.

Wie aus Fig. 6 zu ersehen, ist die Hohlachse 18 an der Schwenkkonsole 17 befestigt. Koaxial innerhalb der Hohlachse 18 ist die Antriebswelle 26 mittels Wälzlager 30 drehgelagert. Am unteren freien Ende der Antriebswelle 26 befindet sich ein Flansch 31, an welchem die plattenartige Halterung 19, wie bei 32 angedeutet, mit Schraubverbindungen angeflanscht ist.

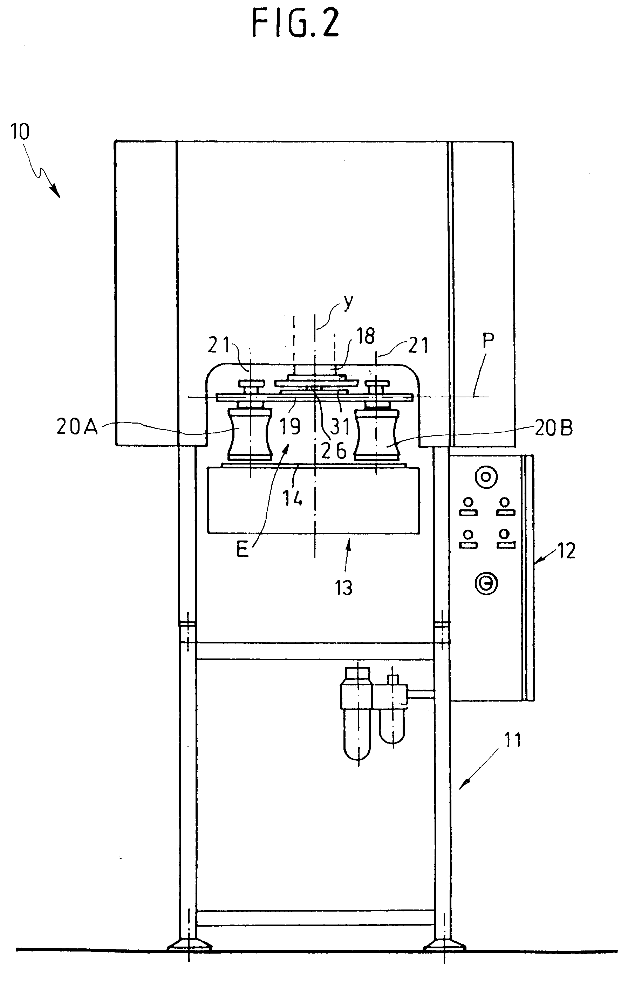

Wie aus Fig. 2 zu ersehen, sind die Einzelvorrichtungen, die anhand der beiden Bürstenrollen 20A, 20B repräsentativ gezeigt sind, unterhalb der plattenartigen Halterung 19 befestigt bzw. gelagert und gemeinsam mit dieser um die Drehachse y drehbar.

Im Zusammenhang der Fig. 1, 2 und 4 ist auch vorstellbar, daß der in Förderrichtung x des Obergurtes 14 zugeförderte Käselaib K in der dargestellten Umfangslage der beiden Bürstenrollen 20A, 20B gegen diese anläuft, somit also von diesen aufgehalten und zugleich bezüglich der Drehachse y zentriert wird. Dieses deshalb, weil sich die Drehachsen 21 der Bürstenrollen 20A, 20B beidendseitig einer den Käselaib K durchsetzenden Sektantialebene S in Förderrichtung x stromabwärts vor dem Käselaib K befinden.

Der weitere Aufbau der Vorrichtung läßt sich am besten anhand einer Funktionserörterung beschreiben:

Wenn der Käselaib K von links nach rechts in Förderrichtung x (s. Fig. 1 und 4) bzw. gemäß Fig. 2 (gemäß Fig. 2: in die Papierebene hinein) zugefördert ist, wird der Käselaib K durch die beiden rechts von der Rotationsachse y (s. Fig. 1 und 4) orientierten Bürstenrollen 20A, 20B aufgehalten. Zugleich wird das Förderband 13 stillgesetzt, so daß während des Ruhetaktes nun die Umreifung des Mantels M des Käselaibes K mittels des manschettenartigen Bandes B erfolgen kann.

Das Band B ist auf einer Bandvorratsrolle 34 gespeichert. Benachbart der Ablaufseite A der Bandvorratsrolle 34 liegt ein Bremskörper 35 mit relativ geringem Normaldruck an der Mantelfläche 36 der Bandvorratsrolle 34 an. Hierdurch soll eine Straffung des Bandes erreicht und zugleich dessen unkontrolliertes Abspulen verhindert werden.

Von der Ablaufseite A gelangt das Band B an eine Umlenkachse 37, welche zugleich eine Schwenkachse für ein trogartiges Bandführungsmittel 38 bildet.

Innerhalb des trogartigen Bandführungsmittels 38, welches einen Trogboden 39 und Trogwände 40 aufweist, ist das Band B über die Trogbodenfläche 41 geführt und zugleich zwischen letzterer und einer Band-Führungsgabel 42 gehalten.

Eine aus weichelastischem Werkstoff bestehende Bandauszugrolle 43 kontaktiert die eine Hauptfläche des Bandes B, nämlich die Bandinnenfläche 44. Die Bandaußenfläche ist mit 45 bezeichnet.

Die Bandauszugrolle 43, welche mit einem Wellenfortsatz 46 drehfest ist, wird über letzteren in einer noch zu beschreibenden Weise in Drehrichtung v angetrieben.

Nachdem der Käselaib K seine Anfangsposition gemäß den Fig. 1 und 4 erreicht hat, werden Sprühdüsen 47, welche an der Innenfläche 48 einer Abschirmung 49 angebracht sind, mit Leim beaufschlagt. Dieses geschieht derart, daß einer der Sprühkegel den Mantel M des Käselaibes K an der Anlagestelle C beaufschlagt, an welcher das vordere freie Bandende 50 den Mantel M berühren wird.

Zugleich mit dem Ingangsetzen der Sprühdüsen 47 wird die plattenartige Halterung 19 mitsamt den an ihr befestigten bzw. gelagerten Einzelvorrichtungen in Arbeitsdrehrichtung z mittels der Antriebswelle 26 in Rotation um die Drehachse y versetzt.

Da der Antrieb der Bandauszugrolle 43 von der Antriebsbewegung der Antriebswelle 26 abgeleitet ist, wird mit Beginn der Drehbewegung der Halterung 19 zugleich das vordere freie Bandende 50 gegen die Anlagestelle C geschoben.

Zugleich mit der Drehbewegung verlagert sich die Bandanlagestelle C in Arbeitsdrehrichtung z, so daß das an der mit Leim versehenen Mantelfläche M anhaftende Band B durch die nachfolgende Bandrolle 20B an den Käselaib angedrückt wird.

Die Halterung 19 vollführt nun 1,5 Umdrehungen, dreht also über einen Umfangswinkel von 540°. Während dieser Umdrehungen wird das Band B um den Mantel M herumgeschlungen und zugleich durch beide Bürstenrollen 20A, 20B an den Mantel M angepreßt.

Kurz vor Beendigung der 1,5 Umdrehungen wird die Bandinnenfläche 44 außer Kontakt mit der Bandauszugrolle 43 versetzt. Dies geschieht mittels eines Druckluftzylinders 51, welcher oberhalb der plattenartigen Halterung 19 angeordnet ist. Dieser schwenkt mittels seiner Kolbenstange 52 und mittels des mit letzterer verbundenen Kupplungsbolzens 53, welcher die plattenartige Halterung 19 in einer nicht gezeigten Öffnung nach unten hin durchgreift, das trogartige Bandführungsteil 38 in Richtung e von der Bandauszugrolle 43 weg.

Zeitgleich mit dem Druckluftzylinder 51 wird ein ebenfalls oberhalb der plattenartigen Halterung 19 angeordneter Druckluftzylinder 54 in Tätigkeit gesetzt, welcher mittels seiner Kolbenstange 55 und des Kupplungsbolzens 56 einen bei 57 gelagerten einarmigen Messerhebel 58 mit am freien Hebelende angeordneter Messerklinge 59 in Richtung f an sich heranzieht. Auf diese Weise ergibt sich durch die Bewegungsrichtungen e und f eine Scherbewegung, so daß das vordere freie Bandende 50 sicher durchtrennt wird.

Damit die Messerklinge 59 zu Beginn ihrer Schneidfunktion am freien Bandende 50 ein sicheres Schneidwiderlager findet, wird zeitgleich mit der Aktivierung der Druckluftzylinder 51, 54 ebenfalls ein oberhalb der plattenartigen Halterung 19 angeordneter Druckluftzylinder 60 aktiviert. Der Druckluftzylinder 60 betätigt nämlich eine um eine Drehachse 61 schwenkbare Bremsbacke 62, welche bei Zustellung eine Bremsscheibe 63 blockiert, die mit einem die plattenartige Halterung 19 durchsetzenden Wellenstumpf 64 der Bandvorratsrolle 34 drehfest ist.

Die Druckluftzylinder 51, 54 und 60 können jeweils einfachwirkend mit Federrückstellung in ihre neutrale Lage oder doppeltwirkend ausgebildet sein.

Der Antrieb der Bandauszugrolle 43 geschieht wie folgt:
An der raumfesten Hohlachse 18 ist ein Kettenrad 65 befestigt. Das Kettenrad 65 ist von einer Antriebskette 66 über einen Umfangswinkel von weniger als 180° umschlungen und hierbei über Umlenkkettenrädern 67, 68, welche sämtlich oben auf der plattenartigen Halterung 19 drehgelagert sind, umlaufend geführt.

Eines der Umlenkkettenräder 67 ist als Doppelkettenrad ausgeführt und von einer zusätzlichen Antriebskette 69 umschlungen, die ein Kettenritzel 33 treibt, das mit dem bereits erwähnten Wellenfortsatz 46 in der plattenartigen Halterung 19 gelagert ist. Der Wellenfortsatz 46 durchsetzt zudem die Halterung 19 und trägt an seinem freien unteren Ende die Bandauszugrolle 43 drehfest. Auf diese Weise ist nachvollziehbar, daß die Bandauszugrolle 43 in Arbeitsdrehrichtung v versetzt wird, wenn die plattenartige Halterung 19 in Drehrichtung z rotiert.

Sobald die plattenartige Halterung 19 in vorbeschriebener Weise 1,5 Umdrehungen in Drehrichtung z vollführt hat, dabei das Band B abgetrennt und vollständig durch die beiden Bandrollen 20A und 20B gegen den mit Leim versehenen Mantel M des Käselaibes K gepreßt wurde, befinden sich die Bürstenrollen 20A und 20B im Vergleich zu Fig. 4 in einer um 180° umfangsversetzten Lage links vom Käselaib K (in den Zeichnungen nicht dargestellt). Dieses bedeutet, daß die Bürstenrollen 20A und 20B den Käselaib in Förderrichtung x freigeben, so daß dieser weitergetaktet werden kann.

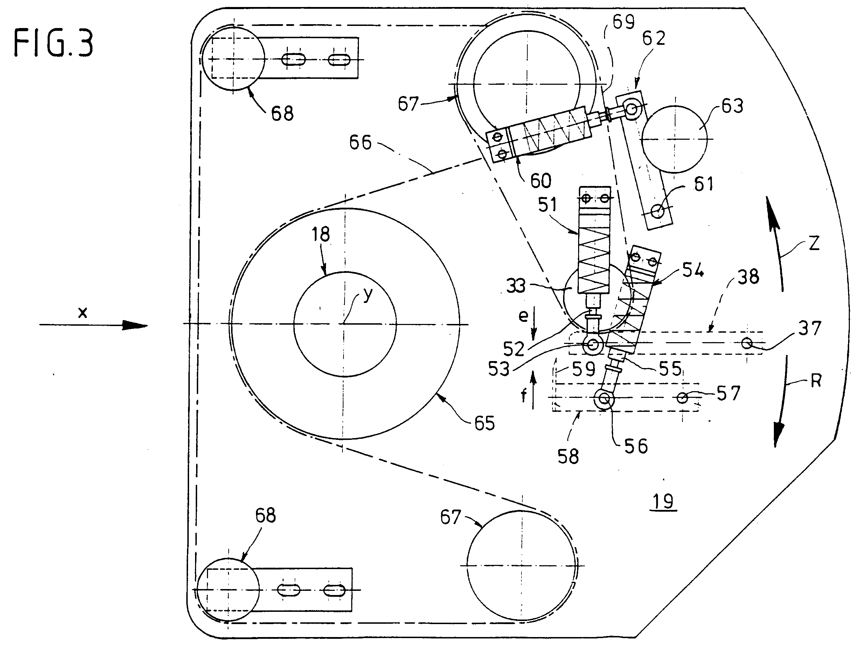

Damit die plattenartige Halterung 19 ihre Ausgangsposition gemaß den Fig. 1 bis 4 zur Behandlung eines nachfolgenden Käselaibes K einnehmen kann, genügt es, die plattenartige Halterung 19 um 180° oder um 540° in Leerlaufrichtung R zurückzudrehen.

Um dabei eine unzulässige Bewegung des Bandes B während der Rückdrehbewegung in Leerlaufrichtung R zu vermeiden, ist es zweckmäßig, die Druckluftzylinder 51, 54 und 60 erst dann zu inaktivieren, wenn die Ausgangsposition gemäß den Fig. 1 und 4 wieder erreicht ist.

Die Steuerung der Antriebsbewegung durch den Elektromotor 22 kann zweckmäßig durch eine den herannahenden Käselaib K erfassende Lichtschrankensteuerung in Verbindung beispielsweise einer Zeitvorgabe erfolgen.

Die Steuerung der Druckluftzylinder 51, 54 und 60 sowie der Leim-Sprühdüsen 47 kann über einen mit der Antriebswelle 26 umflaufenden Drehwinkel- und Drehrichtungsgeber erfolgen, was an sich bekannt ist.

Die auf der plattenartigen Halterung 19 angeordneten Einzelvorrichtungen, z.B. die Bürstenrollen 20A und 20B, können in nicht dargestellter Weise, beispielsweise mittels einer Exzenterlagerung, in Anpassung an unterschiedliche Käselaib-Durchmesser verstellarretiert werden.

Die Antriebswelle 26 bildet eine Hohlwelle, deren axialer Hohlraum 70 in nicht dargestellter Weise eine Durchführung für in Fig. 6 nur unvollständig dargestellte Schläuche 71 (zur Leitung von Luft und Leim) aufweisen.

Ergänzend sei hinzugefügt, daß die Durchtrittsöffnung, welche dem Käselaib K die Zuförderung - oder nach 180° Umfangswinkelversatz die Abförderung - unter die Halterung 19 oder von dieser weg ermöglicht, mit der Bezugsziffer E versehen ist.

Die Bürstenrollen 20A, 20B sind auf ihren Lagerstellen 21 antriebslos gelagert.

Die Ebene - Plattenebene -, die durch die plattenartige Halterung 19 geht, ist in den Fig. 1 und 2 mit P bezeichnet.

## Patentansprüche

1. Vorrichtung (10) zum Anbringen eines manschettenartigen Bandes (B) um die Mantelfläche (M) eines zylindrischen Käselaibes (K), mit einer den Käselaib (K) unterstützenden Förderbahn (14), mit mindestens einer Halterung (19) für mehrere, der Handhabung des Bandes (B) dienender Einzelvorrichtungen, wie für eine Bandvorratsrolle (34), für Bandumlenk- (37), Bandführungs(38) und Bandablängmittel (59), für Leimauftragmittel (47) und für Andruckmittel (20A, 20B), welche das Band (B) gegen die Mantelfläche (M) des Käselaibes (K) halten, dadurch gekennzeichnet, daß der Käselaib (K) bezüglich der Förderbahn (14) gegen Drehung sicherbar ist, daß die Einzelvorrichtungen (34, 37, 38, 59), eine Durchtrittsöffnung (E) für den Käselaib (K) freilassend, um letzteren herum gruppierbar und unterhalb der gemeinsamen Halterung (19) an letzterer angeordnet sind, welche gemeinsam mit den an ihr gehaltenen Einzelvorrichtungen (34, 37, 38, 39) um eine mit der Längsmittelachse des Käselaibes (K) koaxiale Drehachse (y) antreibbar ist.

2. Vorrichtung nach Anspruch 1, dadurch gekennzeichnet, daß die Förderbahn ein die Halterung (19) untergreifendes Förderband (14) ist.

3. Vorrichtung nach Anspruch 2, dadurch gekennzeichnet, daß das Förderband (14) taktweise bewegbar ist und daß der Käselaib (K) während eines Ruhetaktes unter der Halterung (19) verharrt.

4. Vorrichtung nach Anspruch 2 oder nach Anspruch 3, dadurch gekennzeichnet, daß der Reibschluß zwischen der Oberfläche des Förderbandes (14) und der Unterfläche des Käselaibes (K) dessen Sicherung gegen Drehung bildet.

5. Vorrichtung nach einem der Ansprüche 1 bis 4, dadurch gekennzeichnet, daß die Halterung (19) ein plattenartiges Bauteil ist.

6. Vorrichtung nach der Ansprüche 1 bis 5, dadurch gekennzeichnet, daß die Halterung (19) am unteren freien Ende einer die Drehachse bildenden Antriebswelle (26) angeordnet und dort (bei 31; 32) angeflanscht ist.

7. Vorrichtung nach dem Anspruch 6, dadurch gekennzeichnet, daß die Antriebswelle (26) gemeinsam mit der Halterung (19) in einer Schwenkebene angeordnet und daß die Halterung (19) gemeinsam mit den an ihr angeordneten Einzelvorrichtungen (34, 37, 38, 59) aus dem von der Förderbahn (14) gebildeten Fördertrum (OT) für die Käselaibe (K) herausschwenkbar ist.

8. Vorrichtung nach Anspruch 7, dadurch gekennzeichnet, daß die Schwenkebene eine Vertikalebene bildet.

9. Vorrichtung nach einem der Ansprüche 6 bis 8, dadurch gekennzeichnet, daß die Antriebswelle (26) in einer undrehbar angeordneten Hohlachse (18) gelagert ist, welche mittels einer Schwenkkonsole (17) an einer raumfesten horizontalen Schwenkachse (16) gehalten ist.

10. Vorrichtung nach einem der Ansprüche 6 bis 9, dadurch gekennzeichnet, daß die Antriebsbewegung für an der Halterung (19) angeordnete Einzelvorrichtungen (z.B. 43) von der Drehbewegung der Antriebswelle (26) abgeleitet ist.

11. Vorrichtung nach Anspruch 10, dadurch gekennzeichnet, daß am unteren freien Ende der Hohlachse (18) ein Rad (65) befestigt ist, welches von einem umlaufend geführten flexiblen Antriebsmittel (66) teilweise umschlungen ist, das auf der Halterung (14) drehgelagerte Umlenk- oder Antriebsräder (67, 68) treibt.

12. Vorrichtung nach Anspruch 11, dadurch gekennzeichnet, daß das auf der Hohlachse (18) befestigte Rad sowie die Antriebs- und Umlenkräder Kettenräder (65, 67, 68) bilden und daß das flexible Antriebsmittel eine Antriebskette (66) ist.

13. Vorrichtung nach Anspruch 5 allein oder mit einem der Ansprüche 6 bis 12, dadurch gekennzeichnet, daß die Dreh- bzw. Schwenkachsen (z.B. 21; 37; 57) der unter- und oberhalb der plattenartigen Halterung (19) gelagerten Einzelvorrichtungen (z.B. 20A, 20B; 38; 57) sich orthogonal zur Plattenebene (P) erstrecken.

14. Vorrichtung nach Anspruch 5 allein oder mit einem der Ansprüche 6 bis 13, dadurch gekennzeichnet, daß das Band (B) an der Ablaufseite (A) einer Bandvorratsrolle (34) längs eines trogartigen Bandführungsmittels (38) innenseitig auf dessen sich orthogonal zur plattenebene (P) erstreckendem ebenen Trogboden (39) geführt (bei 41) ist.

15. Vorrichtung nach Anspruch 14, dadurch gekennzeichnet, daß das Band (B) an seiner einen Hauptfläche, z.B. an seiner Bandaußenfläche (45), vom Trogboden (39) und an seiner anderen Hauptfläche, z.B. seiner Bandinnenfläche (44), von einer Führungsgabel (42) geführt ist, welche an dem dem Mantel (M) des Käselaibes (K) zugewandten Ende des trogartigen Bandführungsmittels (38) angeordnet ist.

16. Vorrichtung nach Anspruch 15, dadurch gekennzeichnet, daß die Führungsgabel (42) von einer eine Hauptfläche des Bandes (B), z.B. die Bandinnenfläche (44), kontaktierenden Bandauszugrolle (43) durchgriffen ist, mittels welcher das vordere freie Bandende (50) gegen den Mantel (M) des Käselaibes (K) schiebbar und anlegbar ist.

17. Vorrichtung nach Anspruch 16, dadurch gekennzeichnet, daß die Bandauszugrolle (43) eine weichelastische Oberfläche mit relativ großem Haftreibungsbeiwert aufweist.

18. Vorrichtung nach einem der Ansprüche 15 bis 17, dadurch gekennzeichnet, daß das trogartige Bandführungsmittel (38) an seinem der Führungsgabel (42) abgewandten Ende an einer zur Plattenebene (P) vertikalen Schwenkachse (37) schwenkgelagert ist.

19. Vorrichtung nach Anspruch 18, dadurch gekennzeichnet, daß das trogartige Bandführungsmittel (38) und das von ihm geführte Band (B) mittels eines Antriebsteils (51) außer Eingriff mit der Bandauszugrolle (43) versetzbar ist.

20. Vorrichtung nach einem der Ansprüche 1 bis 19, dadurch gekennzeichnet, daß als Leimauftragmittel mindestens eine Sprühdüse (47) vorgesehen ist, deren Sprühkegel den Mantel (M) des Käselaibes (K) in Arbeitsdrehrichtung (Z) der Halterung (19) unmittelbar vor der Anlegestelle (C) des vorderen freien Bandendes (50) beaufschlagt.

21. Vorrichtung nach Anspruch 20, dadurch gekennzeichnet, daß die Sprühdüse (47) an der dem Käselaib (K) zugewandten Innenfläche (48) einer sich orthogonal zur Plattenebene (P) erstreckenden Abschirmung (49) angeordnet ist, welche Bandvorratsrolle (34), Bandführungsmittel (38) und Bandauszugrolle (43) vor Leimspritzern schützt.

22. Vorrichtung nach einem der Ansprüche 1 bis 21, dadurch gekennzeichnet, daß die Bandvorratsrolle (34) benachbart vor ihrer Ablaufseite (A) an ihrer Außenmantelfläche (36) von einem Bremskörper (35) kontaktiert ist.

23. Vorrichtung nach Anspruch 5 allein oder mit einem der Ansprüche 6 bis 22, dadurch gekennzeichnet, daß Bandandruckmittel von zwei Rollen (20A; 20B) gebildet sind, die eine nachgiebige Außenmantelfläche aufweisen, wobei sich die Drehachsen (21) der Rollen (20A; 20B) orthogonal zur Plattenebene (P) erstrecken und sich beidendseitig in einer benachbart der Anlegestelle (C) des vorderen freien Bandendes (50) angeordneten, den Käselaib (K) durchsetzenden Sekantialebene (S) außen vor dem Mantel (M) des Käselaibes (K) befinden.

24. Vorrichtung nach Anspruch 23, dadurch gekennzeichnet, daß die sich jeweils quer zur Förderrichtung (x) erstreckende Sekantialebene (S) sich bei Zuförderung des Käselaibes (K) bezüglich der Förderrichtung (x) stromabwärts und nach einem Umfangswinkelversatz von 180° bei Abförderung des Käselaibes (K) bezüglich der Förderrichtung (x) stromaufwärts befindet.

25. Vorrichtung nach den Ansprüchen 23 und 24, dadurch gekennzeichnet, daß die beiden Rollen (20A; 20B) sich bei Arbeitsdrehrichtung (Z) der Halterung (19) auf dem Mantel (M) des Käselaibes abwälzen.

26. Vorrichtung nach Anspruch 25, dadurch gekennzeichnet, daß die beiden Rollen (20A, 20B) mittels des flexiblen Antriebsmittels (66) drehangetrieben sind.

27. Vorrichtung nach Anspruch 25, dadurch gekennzeichnet, daß die beiden Rollen (20A, 20B) antriebslos umlaufend sind.

28. Vorrichtung nach einem der Ansprüche 23 bis 27, dadurch gekennzeichnet, daß die Rollen (20A, 20B) Bürstenrollen sind.

29. Vorrichtung nach Anspruch 14 allein oder mit einem der Ansprüche 15 bis 28, dadurch gekennzeichnet, daß ein Bandablängmittel von einer dem vorderen freien Bandende (50) benachbarten Messerklinge (59) gebildet ist, die endseitig am freien Ende eines einarmigen Messerhebels (58) befestigt ist, der auf der der Trogbodenfläche (41) des Bandführungsmittels (38) abgewandten Seite angeordnet ist.

30. Vorrichtung nach Anspruch 29, dadurch gekennzeichnet, daß der Messerhebel (58) mittels eines Antriebsteils (54) schwenkbar ist.

31. Vorrichtung nach Anspruch 14 allein oder mit einem der Ansprüche 15 bis 30, dadurch gekennzeichnet, daß die Bandvorratsrolle (34) mit einer Bremsscheibe (63) versehen ist, welche mittels einer von einem Antriebsteil (60) bewegbaren Bremsbacke (62) beaufschlagbar ist.

32. Vorrichtung nach den Ansprüchen 14, 29 und 31, dadurch gekennzeichnet, daß die dem trogartigen Bandführungsmittel (38), dem Messerhebel (58) und der Bremsbacke (62) zugeordneten Antriebsteile mittels eines Druckfluids betriebene Kolben-Zylinder-Einheiten (51, 54, 60) sind, die jeweils einfachwirkend mit Federrückstellung in ihre neutrale Lage oder doppeltwirkend ausgebildet sind.

33. Vorrichtung nach Anspruch 32, dadurch gekennzeichnet, daß die Antriebsteile (51, 54) oberhalb der plattenartigen Halterung (19) auf dieser angeordnet sind und letztere mit an den anzutreibenden Einzelvorrichtungen (38, 58) angreifenden Kupplungsteilen (53, 56) durchgreifen.

34. Vorrichtung nach den Ansprüchen 11, 13 oder diesen mit einem der Ansprüche 14 bis 33, dadurch gekennzeichnet, daß das an der Hohlachse (18) befestigte Rad (65), die Antriebs- und Umlenkräder (67, 68) und das flexible Antriebsmittel (66) oberhalb der plattenartigen Halterung (19) angeordnet sind, wobei Antriebsräder (z.B. 33) die plattenartige Halterung (19) mit einem Wellenfortsatz (z.B. 46) durchgreifen.

35. Vorrichtung nach Anspruch 34, dadurch gekennzeichnet, daß die Bandauszugrolle (43) auf dem Wellenfortsatz (46) drehfest angeordnet ist.

36. Vorrichtung nach Anspruch 6 allein oder mit einem der Ansprüche 7 bis 35, dadurch gekennzeichnet, daß die Antriebswelle (26) eine Hohlwelle ist, deren axialer Hohlraum (70) eine Durchführung für einerseits Leim und andererseits Druckfluid führende Leitungen ( 71) bildet.

37. Vorrichtung nach Anspruch 23 allein oder mit einem der Ansprüche 24 bis 36, dadurch gekennzeichnet, daß der Abstand zwischen den Drehachsen (21) der Rollen (20A, 20B) einstellbar und arretierbar ist.

## Claims

1. Device (10) for fitting a sleeve-like band (B) round the superficies (M) of a cylindrical cheese (K), having a conveyer track (14) supporting the cheese (K) and having at least one mounting arrangement (19) for a number of individual devices used for handling the band (B), such as a band storage roller (34), band-deflecting means (37), band-guiding means (38) and means (59) for cutting the band to length, glue-applying means (47) and pressure means (20A, 20B) which hold the band (B) against the superficies (M) of the cheese (K), **characterized in that** the cheese (K) can be secured against rotation relative to the conveyer track (14) and that the individual devices (34, 37, 38, 59) can be grouped, while leaving free a transition aperture (E) for the cheese (K), around the latter and are disposed underneath the common mounting arrangement (19) and on the latter, which can be driven, together with the individual devices (34, 37, 38, 39) held on it, about an axis of rotation (y) which is coaxial with the longitudinal central axis of the cheese (K).

2. Device according to Claim 1, **characterized in that** the conveyer track is a conveyer belt (14) that engages under the mounting arrangement (19).

3. Device according to claim 2, **characterized in that** the conveyer belt (14) can be moved in a cyclical manner and that the cheese (K) remains stationary, during a rest cycle, under the mounting arrangement (19).

4. Device according to claim 2 or claim 3, **characterized in that** the friction contact between the surface of the conveyer belt (14) and the undersurface of the cheese (K) constitutes the means of securing the latter against rotation.

5. Device according to one of claims 1 to 4, **characterized in that** the mounting arrangement (19) is a plate-like component.

6. Device according to claims 1 to 5, **characterized in that** the mounting arrangement (19) is disposed at the lower, free end of a drive shaft (26) constituting the axis of rotation and is flange mounted at that point (at 31; 32).

7. Device according to claim 6, **characterized in that** the drive shaft (26) is disposed, together with the mounting arrangement (19), in one pivoting plane and that the mounting arrangement (19) can be pivoted, together with the individual devices (34, 37, 38, 59) disposed on it, out of that conveyer strand (OT) for the cheese (K) which is constituted by the conveyer track (14).

8. Device according to claim 7, **characterized in that** the pivoting plane constitutes a vertical plane.

9. Device according to one of claims 6 to 8, **characterized in that** the drive shaft (26) is supported in a hollow spindle (18) disposed in a rotationally fixed manner, which is held, by means of a pivoting bracket (17), on a spatially fixed, horizontal pivoting spindle (16).

10. Device according to one of claims 6 to 9, **characterized in that** the driving movement for individual devices (e.g. 43) disposed on the mounting arrangement (19) is derived from the rotational movement of the drive shaft (26).

11. Device according to claim 10, **characterized in that** there is fastened to the lower, free end of the hollow spindle (18) a wheel (65) which has partially wound round it a circulatingly guided, flexible drive means (66) which drives deflecting wheels or drive wheels (67, 68) mounted for rotation on the mounting arrangement (14).

12. Device according to claim 11, **characterized in that** the wheel fastened on the hollow spindle (18), and also the drive wheels and deflecting wheels constitute chain wheels (65, 67, 68) and that the flexible drive means is a drive chain (66).

13. Device according to claim 5, either on its own or combined with one of claims 6 to 12, **characterized in that** the axes of rotation or pivoting (e.g. 21; 37; 57) of the individual devices (e.g. 20A, 20B; 38; 57) supported underneath and above the plate-like mounting arrangement (19) extend orthogonally to the plane (P) of the plate.

14. Device according to claim 5, either on its own or combined with one of claims 6 to 13, **characterized in that** the band (B) is guided (at 41), on the discharge side (A) of a band storage roller (34), along a trough-like band-guiding means (38) on the inside and on the flat trough floor (39) thereof, which extends orthogonally to the plane (P) of the plate.

15. Device according to claim 14, **characterized in that** the band (B) is guided, at one of its main surfaces, e.g. at the outer surface (45) of the band, by the trough floor (39) and, at its other main surface, e.g. the inner surface (44) of the band, by a guiding fork (42) which is disposed at that end of the trough-like band-guiding means (38) which faces towards the convex surface (M) of the cheese (K).

16. Device according to claim 15, **characterized in that** the guiding fork (42) has, engaging through it, a band draw-out roller (43) which makes contact with a main surface of the band (B), e.g. the inner surface (44) of the band, and by means of which the front, free end (50) of the band can be thrust and applied against the convex surface (M) of the cheese (K).

17. Device according to claim 16, **characterized in that** the band draw-out roller (43) has a flexible surface with a relatively high coefficient of adhesive friction.

18. Device according to one of claims 15 to 17, **characterized in that**, at its end which faces away from the guiding fork (42), the trough-like band-guiding means (38) is mounted for pivoting on a pivoting spindle (37) which is vertical to the plane (P) of the plate.

19. Device according to claim 18, **characterized in that** the trough-like band-guiding means (38) and the band (B) guided by the latter can be shifted out of engagement with the band draw-out roller (43) by means of a drive part (51).

20. Device according to one of claims 1 to 19, **characterized in that** there is provided, as the glue-applying means, at least one spray nozzle (47), the spray cone of which acts upon the convex surface (M) of the cheese (K) in the working direction of rotation (Z) of the mounting arrangement (19) immediately in front of the point of application (C) of the front, free end (50) of the band.

21. Device according to claim 20, **characterized in that** the spray nozzle (47) is disposed on that inner surface (48), which faces towards the cheese (K), of a screening arrangement (49) which extends orthogonally to the plane (P) of the plate and protects the band storage roller (34), band-guiding means (38) and band draw-out roller (43) from splashes of glue.

22. Device according to one of claims 1 to 21, **characterized in that** a braking body (35) makes contact with the band storage roller (34), adjacently in front of its discharge side (A), at its outer superficies (36).

23. Device according to claim 5, either on its own or combined with one of claims 6 to 22, **characterized in that** the means for pressing the band on are constituted by two rollers (20A; 20B) which have a yielding outer superficies, the axes of rotation (21) of the rollers (20A; 20B) extending orthogonally to the plane (P) of the plate and being located, at the two ends, externally in front of the convex surface (M) of the cheese (K), in a secantial plane (S) adjoining the point of application (C) of the front, free end (50) of the band and passing through the cheese (K).

24. Device according to claim 23, **characterized in that** the secantial plane (S) extending transversely to the direction of conveyance (x) in each case is located downstream, relative to the direction of conveyance (x), when the cheese (K) is conveyed in and, after a shift of 180° in the peripheral angle, upstream, relative to the direction of conveyance (x), when the cheese (K) is conveyed away.

25. Device according to claims 23 and 24, **characterized in that** the two rollers (20A; 20B) roll on the convex surface (M) of the cheese in the working direction of rotation (Z) of the mounting arrangement (19).

26. Device according to claim 25, **characterized in that** the two rollers (20A, 20B) are driven in rotation by means of the flexible drive means (66).

27. Device according to claim 25, **characterized in that** the two rollers (20A, 20B) revolve in a non-driven manner.

28. Device according to one of claims 23 to 27, **characterized in that** the rollers (20A, 20B) are brush rollers.

29. Device according to claim 14, either on its own or combined with one of claims 15 to 28, **characterized in that** a means for cutting the band to length is constituted by a knife blade (59) which is adjacent to the front, free end (50) of the band and is fastened, at the end, to the free end of a single-arm knife lever (58) which is disposed on that side which faces away from the trough floor surface (41) of the band-guiding means (38).

30. Device according to claim 29, **characterized in that** the knife lever (58) can be pivoted by means of a drive part (54).

31. Device according to claim 14, either on its own or combined with one of claims 15 to 30, **characterized in that** the band storage roller (34) is provided with a brake disc (63) which can be acted upon by means of a brake shoe (62) that can be moved by a drive part (60).

32. Device according to claims 14, 29 and 31, **characterized in that** the drive parts associated with the trough-like band-guiding means (38), the knife lever (58) and the brake shoe (62) are piston/cylinder units (51, 54, 60) which are operated by means of a pressure fluid and are, in each case, of single-action construction, with spring-type restoration to their neutral position, or of double-action construction.

33. Device according to claim 32, **characterized in that** the drive parts (51, 54) are disposed above the plate-like mounting arrangement (19) and on the latter, and engage through it by means of coupling parts (53, 56) acting upon the individual devices (38, 58) to be driven.

34. Device according to claims 11, 13 or these latter claims combined with claims 14 to 33, **characterized in that** the wheel (65) fastened to the hollow spindle (18), the drive wheels and deflecting wheels (67, 68) and the flexible drive means (66) are disposed above the plate-like mounting arrangement (19), while drive wheels (e.g. 33) engage through the plate-like mounting arrangement (19) by means of a shaft extension (e.g. 46).

35. Device according to claim 34, **characterized in that** the band draw-out roller (43) is disposed on the shaft extension (46) in a rotationally fixed manner.

36. Device according to claim 6, either on its own or combined with one of claims 7 to 35, **characterized in that** the drive shaft (26) is a hollow shaft, the axial cavity (70) of which constitutes a transition guide for lines (71) conducting, on the one hand, glue and, on the other, pressure fluid.

37. Device according to claim 23, either on its own or combined with one of claims 24 to 36, **characterized in that** the distance between the axes of rotation (21) of the rollers (20A, 20B) can be adjusted and locked.

## Revendications

1. Dispositif (10) pour appliquer une bande (B) analogue à un manchon autour de la surface latérale (M) d'une meule de fromage cylindrique (K), comprenant une voie transporteuse (14) qui supporte la meule de fromage (K), et comprenant au moins un organe de retenue (19) destiné à plusieurs dispositifs individuels qui servent à manipuler la bande (B), comme un rouleau (34) d'alimentation en bande, un moyen de déviation de la bande (37), de guidage de la bande (38) et de mise à longueur de la bande (59), un moyen d'application de la colle (47) et un moyen de serrage (20A, 20B) qui maintient la bande (B) contre la surface latérale (M) de la meule de fromage (K), caractérisé par le fait que la meule de fromage (K) peut être bloquée en rotation par rapport à la voie transporteuse (14), et par le fait que les dispositifs individuels (34, 37, 38, 59) peuvent être groupés autour de la meule de fromage (K) en laissant libre une ouverture de passage (E) pour celle-ci, et qu'ils sont montés sur l'organe de retenue commun (19), au-dessous de celui-ci, lequel peut être entraîné, avec les dispositifs individuels (34, 37, 38, 59) maintenus sur lui, autour d'un axe de rotation (y) qui est coaxial par rapport à l'axe longitudinal central de la meule de fromage (K).

2. Dispositif selon la revendication 1, caractérisé par le fait que la voie transporteuse est une bande transporteuse (14) qui passe sous l'organe de retenue (19).

3. Dispositif selon la revendication 2, caractérisé par le fait que la bande transporteuse (14) peut être déplacée pas à pas, et par le fait que la meule de fromage (K) s'arrête sous l'organe de retenue (19) pendant une phase de repos.

4. Dispositif selon la revendication 2 ou selon la revendication 3, caractérisé par le fait que la conjugaison par frottement entre la surface supérieure de la bande transporteuse (14) et la surface inférieure de la meule de fromage (K) constitue le blocage en rotation de celle-ci.

5. Dispositif selon l'une des revendications 1 à 4, caractérisé par le fait que l'organe de retenue (19) est un élément analogue à une plaque.

6. Dispositif selon les revendications 1 à 5, caractérisé par le fait que l'organe de retenue (19) est disposé sur l'extrémité inférieure libre d'un arbre d'entraînement (26) qui constitue l'axe de rotation, et qu'il est fixé à cet endroit par une bride (en 31 ; 32).

7. Dispositif selon la revendication 6, caractérisé par le fait que l'arbre d'entraînement (26) est disposé en commun avec l'organe de retenue (19) dans un plan de pivotement, et par le fait que l'organe de retenue (19) peut pivoter vers l'extérieur depuis le brin transporteur (OT) qui est formé par la voie transporteuse (14) et qui est destiné à la meule de fromage (K), et ce, en commun avec les dispositifs individuels (34, 37, 38, 59) qui sont montés sur lui.

8. Dispositif selon la revendication 7, caractérisé par le fait que le plan de pivotement forme un plan vertical.

9. Dispositif selon l'une des revendications 6 à 8, caractérisé par le fait que l'arbre d'entraînement (26) est monté tournant dans un axe creux (18) qui est monté sans pouvoir tourner et qui est maintenu sur un axe de pivotement fixe et horizontal (16) au moyen d'une console pivotante (17).

10. Dispositif selon l'une des revendications 6 à 9, caractérisé par le fait que le déplacement d'entraînement destiné à des dispositifs individuels (par exemple 43) qui sont montés sur l'organe de retenue (19) est dérivé du déplacement en rotation de l'arbre d'entraînement (26).

11. Dispositif selon la revendication 10, caractérisé par le fait qu'est fixée à l'extrémité inférieure libre de l'axe creux (18) une roue (65) qui est partiellement entourée par un moyen d'entraînement flexible (66), celui-ci étant guidé sans fin et entraînant des roues de renvoi ou d'entraînement (67, 68) qui sont montées en rotation sur l'organe de retenue (19).

12. Dispositif selon la revendication 11, caractérisé par le fait que la roue qui est fixée sur l'axe creux (18), ainsi que les roues de renvoi ou d'entraînement, sont constituées par des roues à chaîne (65, 67, 68), et par le fait que le moyen d'entraînement flexible est une chaîne d'entraînement (66).

13. Dispositif selon la revendication 5 seule ou avec l'une des revendications 6 à 12, caractérisé par le fait que les axes de rotation ou de pivotement, respectivement (par exemple 21 ; 37 ; 57) des dispositifs individuels (par exemple 20A, 20B ; 38 ; 57) qui sont montés au-dessous et au-dessus de l'organe de retenue analogue à une plaque (19) s'étendent perpendiculairement au plan (P) de la plaque.

14. Dispositif selon la revendication 5 seule ou avec l'une des revendications 6 à 13, caractérisé par le fait que la bande (B) est guidée (en 41), du côté du dévidage (A) d'un rouleau (34) d'alimentation en bande, le long d'un moyen (38) de guidage de la bande analogue à un bac, à l'intérieur de ce bac qui s'étend perpendiculairement au plan (P) de la plaque et sur le fond plat (39) de celui-ci.

15. Dispositif selon la revendication 14, caractérisé par le fait que la bande (B) est guidée sur l'une de ses surfaces principales, et par exemple sur sa surface extérieure (45), par le fond (39) du bac et, sur son autre surface principale, et par exemple sur sa surface intérieure (44), par une fourche de guidage (42) disposée sur l'extrémité du moyen (38) de guidage de la bande analogue à un bac qui est tournée vers la surface latérale (M) de la meule de fromage (K).

16. Dispositif selon la revendication 15, caractérisé par le fait que la fourche de guidage (42) est traversée par un rouleau (43) de dévidage de la bande qui est en contact avec une surface principale de la bande, et par exemple avec la surface intérieure (44) de la bande (B), et au moyen duquel l'extrémité avant libre (50) de la bande peut être poussée vers la surface latérale (M) de la meule de fromage (K) et posée sur celle-ci.

17. Dispositif selon la revendication 16, caractérisé par le fait que le rouleau (43) de dévidage de la bande présente une surface souple et élastique dont le coefficient d'adhérence par frottement est relativement élevé.

18. Dispositif selon l'une des revendications 15 à 17, caractérisé par le fait qu'à son extrémité opposée à la fourche de guidage (42), le moyen (38) de guidage de la bande analogue à un bac est monté pivotant sur un axe de pivotement (37) qui est perpendiculaire au plan (P) de la plaque.

19. Dispositif selon la revendication 18, caractérisé par le fait que le moyen (38) de guidage de la bande analogue à un bac et la bande (B) qu'il guide peuvent être déplacés au moyen d'un organe d'entraînement (51) pour quitter le rouleau (43) de dévidage de la bande.

20. Dispositif selon l'une des revendications 1 à 19, caractérisé par le fait qu'il est prévu comme moyen d'application de la colle au moins une buse de pulvérisation (47) dont le cône de pulvérisation alimente la surface latérale (M) de la meule de fromage (K) immédiatement avant l'endroit de contact (C) de l'extrémité avant libre (50) de la bande dans la direction de rotation de travail (Z) de l'organe de retenue (19).

21. Dispositif selon la revendication 20, caractérisé par le fait que la buse de pulvérisation (47) est disposée sur la surface intérieure (48) tournée vers la meule de fromage (K) d'un écran (49) qui s'étend perpendiculairement au plan (P) de la plaque et qui protège des éclaboussures de colle le rouleau (34) d'alimentation en bande, le moyen (38) de guidage de la bande et le rouleau (43) de dévidage de la bande.

22. Dispositif selon l'une des revendications 1 à 21, caractérisé par le fait qu'au voisinage de son côté de sortie (A), le rouleau (34) d'alimentation en bande est en contact avec un organe de freinage (35) par sa surface latérale extérieure (36).

23. Dispositif selon la revendication 5 seule ou avec l'une des revendications 6 à 22, caractérisé par le fait que des moyens de serrage de la bande sont constitués par deux rouleaux (20A, 20B) qui présentent une surface latérale extérieure flexible, cependant que les axes de rotation (21) des rouleaux (20A, 20B) s'étendent perpendiculairement au plan (P) de la plaque et qu'ils se trouvent, du côté des deux extrémités, dans un plan sécant (S) qui est disposé au voisinage de l'endroit de contact (C) de l'extrémité avant libre (50) de la bande et qui traverse la meule de fromage (K), en étant situés devant la surface latérale (M) de la meule de fromage (K) et à l'extérieur de celle-ci.

24. Dispositif selon la revendication 23, caractérisé par le fait que le plan sécant (S) qui s'étend à chaque fois transversalement par rapport à la direction de déplacement (x) se trouve en aval dans la direction de déplacement (x) lors de l'amenée de la meule de fromage (K) et en amont dans la direction de déplacement (x) lors de l'évacuation de la meule de fromage (K) après un déplacement angulaire circonférentiel de 180°.

25. Dispositif selon les revendications 23 et 24, caractérisé par le fait que les deux rouleaux (20A, 20B) roulent sur la surface latérale (M) de la meule de fromage dans la direction de rotation de travail (Z) de l'organe de retenue (19).

26. Dispositif selon la revendication 25, caractérisé par le fait que les deux rouleaux (20A, 20B) sont entraînés en rotation par le moyen d'entraînement flexible (66).

27. Dispositif selon la revendication 25, caractérisé par le fait que les deux rouleaux (20A, 20B) tournent sans être entraînés.

28. Dispositif selon l'une des revendications 23 à 27, caractérisé par le fait que les rouleaux (20A, 20B) sont des rouleaux à brosses.

29. Dispositif selon la revendication 14 seule ou avec l'une des revendications 15 à 28, caractérisé par le fait qu'un moyen de mise à longueur de la bande est constitué par une lame de couteau (59) qui est voisine de l'extrémité avant libre (50) de la bande et qui est fixée du côté de son extrémité à l'extrémité libre d'un levier de couteau à un seul bras (58), celui-ci étant disposé du côté qui est opposé à la surface (41) du fond du bac du moyen (38) de guidage de la bande.

30. Dispositif selon la revendication 29, caractérisé par le fait que le levier de couteau (58) peut être amené à pivoter au moyen d'un organe d'entraînement (54).

31. Dispositif selon la revendication 14 seule ou avec l'une des revendications 15 à 30, caractérisé par le fait que le rouleau (34) d'alimentation en bande est pourvu d'un disque de freinage (63), celui-ci pouvant être soumis à l'action d'une mâchoire de freinage (62) qui est déplacée par un organe d'entraînement (60).

32. Dispositif selon les revendications 14, 29 et 31, caractérisé par le fait que les organes d'entraînement qui sont associés au moyen (38) de guidage de la bande analogue à un bac, au levier de couteau (58) et à la mâchoire de freinage (62) sont des vérins (51, 54, 60) qui sont actionnés au moyen d'un fluide sous pression et qui sont réalisés chacun à simple effet avec un ressort de rappel vers leur position neutre ou à double effet.

33. Dispositif selon la revendication 32, caractérisé par le fait que les organes d'entraînement (51, 54) sont montés sur l'organe de retenue (19) analogue à une plaque, au-dessus de celui-ci, et que ce dernier est traversé par des organes d'accouplement (53, 56) qui viennent en prise avec les dispositifs individuels (38, 58) qu'il s'agit d'entraîner.

34. Dispositif selon les revendications 11, 13 ou avec l'une des revendications 14 à 33, caractérisé par le fait que la roue (65) qui est fixée à l'axe creux (18), les roues d'entraînement et de renvoi (67, 68) et le moyen d'entraînement flexible (66) sont disposés au-dessus de l'organe de retenue (19) analogue à une plaque, cependant que des roues d'entraînement (par exemple 33) traversent l'organe de retenue (19) analogue à une plaque par un prolongement d'arbre (par exemple 46).

35. Dispositif selon la revendication 34, caractérisé par le fait que le rouleau (43) de dévidage de la bande est monté d'une manière solidaire en rotation sur le prolongement d'arbre (46).

36. Dispositif selon la revendication 6 seule ou avec l'une des revendications 7 à 35, caractérisé par le fait que l'arbre d'entraînement (26) est un arbre creux dont la cavité axiale (70) constitue un passage pour de la colle, d'une part, et, d'autre part, pour des conduits (71) que traverse du fluide sous pression.

37. Dispositif selon la revendication 23 seule ou avec l'une des revendications 24 à 36, caractérisé par le fait que la distance entre les axes de rotation (21) des rouleaux (20A, 20B) peut être réglée et fixée.
